# EUROPEAN PATENT APPLICATION

(11) **EP 4 704 241 A1**
(43) Date of publication of application: **04.03.2026**
(21) Application number: 24796664.1
(22) Date of filing: 25.03.2024
(51) Int. Cl.: H01M 50/367, H01M 50/35, H01M 50/204, H01M 50/317

(54) **POWER SUPPLY DEVICE**

(30) Priority: 28.04.2023 JP 2023075248
(71) Applicant: Panasonic Intellectual Property Management Co., Ltd., Kadoma-shi, Osaka 571-0057 (JP)
(72) Inventor: LU, Jia, 571-0057 Osaka (JP); SAKAMOTO, Tomonori, 571-0057 Osaka (JP)
(74) Representative: Eisenführ Speiser
(86) International application number: PCT/JP2024/011689
(87) International publication number: WO 2024/224906

(57) **Abstract**

A power supply device includes secondary battery cells, an inner case accommodating the secondary battery cells therein, and an outer case covering the inner case. The inner case includes first and second plates constituting a side wall of the inner case. The first and second plates form a stacked part of the side wall in which the first and second plates are stacked on each other. The first plate has groove-shaped recesses in a surface thereof facing the second plate. Each of the groove-shaped recesses has a cut end at one end of the each of the groove-shaped recesses cut in a direction intersecting an extending direction of the groove-shaped recesses, the cut end constituting a first opening. The second plate forms a tubular exhaust duct in a part of the second plate stacked on the first plate by closing the one end of the each of the groove-shaped recesses where the first opening of the each of the groove-shaped recesses is formed. The second plate constitutes a second opening at another end of the each of the groove-shaped recesses opened and unclosed by the second plate. The exhaust duct communicates with an inside and an outside of the inner case via the first opening and the second opening.

## Description

### TECHNICAL FIELD

The present disclosure relates to a power supply device including secondary battery cells accommodated in an outer case, and more particularly to a power supply device including secondary battery cells each including an exhaust valve configured to open when an internal pressure becomes higher than a predetermined pressure are accommodated in the outer case.

### BACKGROUND ART

A power supply device including a battery block including battery cells accommodated in an outer case is used as a power supply for factory-use and home-use power storage systems and a power supply for vehicles such as hybrid vehicles and electric vehicles. In these power supply devices, battery cells, as a battery block, are built in the outer case. To secure safety, an exhaust valve is provided in each battery cell. The exhaust valve of the battery cell opens when an internal pressure becomes higher than a predetermined pressure at the time of abnormality, so as to prevent a battery case from bursting. The exhaust valve opens in the abnormal use state of the battery cell, and thus blowout substances, such as gas, discharged have a high temperature and high pressure, causing various thermal damages. The blowout substances discharged from the battery cell may emit flames when the blowout substances having high temperature are released outside the outer case. Therefore, from the perspective of safety, it is required to design a structure that prevents the blowout substances of the battery cell from turning into a flame and spraying out of the case as an outer flame.

Under the circumstances, a structure to gradually reduce pressure and temperature of blowout substances, such as gas, by passing the blowout substances through a labyrinth-like exhaust path inside the outer case is proposed, so that high temperature and high pressure blowout substances will not be released outside the outer case in a high temperature and high pressure state even when an unsafety event occurs in the plurality of battery cells (PTL 1).

### CITATION LIST

### Patent Literature

PTL 1: International Publication No. WO2020-166501

### SUMMARY OF INVENTION

With the above structure, blowout substances, such as gas, discharged from the battery cell can be effectively cooled before being discharged by using a metal outer case and wall. The size of power supply device varies from small to large devices, and the above structure is mainly used in small power supply devices. Recently, a higher output and higher capacity of the power supply device is demanded. In order to satisfy the demand, it is necessary to increase the number of battery cells in the power supply device in addition to the use of a battery cell with large capacity. In this case, however, a structure is required to efficiently decrease the pressure and temperature of a large amount of blowout substances discharged from the exhaust valve within the outer case.

A power supply device according to an aspect of the present disclosure includes: a plurality of secondary battery cells, each of the plurality of secondary battery cells including an exhaust valve that opens when an internal pressure of the each of the plurality of secondary battery cells exceeds a predetermined pressure; an inner case accommodating the plurality of secondary battery cells therein; and an outer case covering the inner case. The inner case includes a first plate and a second plate that constitute a side wall of the inner case. The first plate and the second plate extend in an extending direction of the inner case, and form a stacked part of the side wall in which the first plate and the second plate are partially stacked in an intermediate region between a top and bottom of the side wall. The first plate has a plurality of groove-shaped recesses in a surface of the first plate facing the second plate, each of the groove-shaped recesses extending in a height direction of the side wall and having a cut end at one end of the each of the plurality of groove-shaped recesses cut in a direction intersecting an extending direction of the each of the plurality of groove-shaped recesses, the cut end constituting a first opening. The second plate forms a tubular exhaust duct in a part of the second plate stacked on the first plate by closing the one end of the each of the plurality of groove-shaped recesses where the first opening of the each of the plurality of groove-shaped recesses is formed, the second plate constituting a second opening at another end of the each of the plurality of groove-shaped recesses opened and unclosed by the second plate. The exhaust duct communicates with an inside and an outside of the inner case via the first opening and the second opening.

The power supply device of the present disclosure allows a large amount of gas and foreign substances to be safely discharged outside the outer case even when an unsafe event occurs in the secondary battery cells accommodated in the outer case and a large amount of gas and foreign substances are discharged.

### BRIEF DESCRIPTION OF DRAWINGS

FIG. 1 is a perspective view of a power supply device according to Exemplary Embodiment 1 of the present disclosure.
FIG. 2 is a vertical sectional view of the power supply device at line II-II shown in FIG. 1.
FIG. 3 is a vertical sectional view of the power supply device at line III-III shown in FIG. 1.
FIG. 4 is a horizontal sectional view of the power supply device at line IV-IV shown in FIG. 1.
FIG. 5 is an exploded perspective view of the power supply device shown in FIG. 1.
FIG. 6 is an exploded perspective view of the power supply device shown in FIG. 5 viewed from bottom.
FIG. 7 is an exploded perspective view of an inner case shown in FIG. 5.
FIG. 8 is an exploded perspective view of the inner case shown in FIG. 7 viewed from bottom.
FIG. 9 is an enlarged sectional view of an exhaust duct of the power supply device shown in FIG. 2.
FIG. 10 is an exploded perspective view of a check valve of the power supply device shown in FIG. 1.
FIG. 11 is an enlarged sectional view of the power supply device shown in FIG. 1 for illustrating the operation of the check valve.
FIG. 12 is a sectional view of the check valve for a manufacturing process thereof.
FIG. 13 is an enlarged sectional view of a power supply device according to Exemplary Embodiment 2 of the present disclosure.
FIG. 14 is an enlarged sectional view of a power supply device according to Exemplary Embodiment 3 of the present disclosure.
FIG. 15 is an enlarged sectional view of a power supply device according to Exemplary Embodiment 4 of the present disclosure.
FIG. 16 is an enlarged sectional view of a power supply device according to Exemplary Embodiment 5 of the present disclosure.

### DESCRIPTION OF EMBODIMENT

A power supply device according to one aspect of the present disclosure includes: a plurality of secondary battery cells, each of the plurality of secondary battery cells including an exhaust valve that opens when an internal pressure of the each of the plurality of secondary battery cells exceeds a predetermined pressure; an inner case accommodating the plurality of secondary battery cells therein; and an outer case covering the inner case. The inner case includes a first plate and a second plate that constitute a side wall of the inner case. The first plate and the second plate extend in an extending direction of the inner case, and form a stacked part of the side wall in which the first plate and the second plate are partially stacked in an intermediate region between a top and bottom of the side wall. The first plate has a plurality of groove-shaped recesses in a surface of the first plate facing the second plate, each of the groove-shaped recesses extending in a height direction of the side wall and having a cut end at one end of the each of the plurality of groove-shaped recesses cut in a direction intersecting an extending direction of the each of the plurality of groove-shaped recesses, the cut end constituting a first opening. The second plate forms a tubular exhaust duct in a part of the second plate stacked on the first plate by closing the one end of the each of the plurality of groove-shaped recesses where the first opening of the each of the plurality of groove-shaped recesses is formed, the second plate constituting a second opening at another end of the each of the plurality of groove-shaped recesses opened and unclosed by the second plate. The exhaust duct communicates with an inside and an outside of the inner case via the first opening and the second opening.

The above structure allows a large amount of gas and foreign substances to be safely discharged outside the outer case even when an unsafe event occurs in the secondary battery cells accommodated in the outer case and a large amount of gas and foreign substances are discharged. This is because the above power supply device has the following structure. The power supply device includes the inner case accommodating the plurality of secondary cells inside the outer case. The first plate and the second plate that configure the side wall of the inner case are partially stacked as the stacked part. The groove-shaped recesses are provided in the surface of the first plate facing the second plate, and the cut end formed by cutting one end of each of the groove-shaped recesses is defined as the first opening. In the state stacked on the first plate, the second plate closes the side of the first opening of each of the grove-shaped recesses, thereby forming the tubular exhaust duct in the stacked part, and leaves the other end of each of the groove-shaped recesses open and unclosed, thereby forming the second opening. The exhaust duct communicates with the inside and the outside of the inner case via the first opening and the second opening. The power supply device having discharges high temperature and high pressure blowout substances, such as gas, discharged from the secondary cells accommodated in the inner case to the outside of the inner case through the exhaust duct formed on the side wall of the inner case. Therefore, the blowout substances are ejected out of the inner case in a state the pressure and temperature of the blowout substances passing the exhaust duct are reduced. Discharged gas having a temperature equal to or less than a natural ignition temperature may also become ignition outer flame if there is a spark to be an ignition source. However, linear spark cannot pass through the exhaust duct provided in the stacked part of the side wall of the inner case, thereby effectively preventing an occurrence of the outer flame.

In the power supply device as configured above, both ends of the exhaust duct formed on the side wall of the inner case communicate the inside and the outside of the inner case. The first opening is the cut end formed by cutting the one end of the groove-shaped recess, and the second opening is the other end left open and unclosed by the second plate. Therefore, a process of piercing or punching is not necessary, and the inside and the outside of the inner case is easily connected by providing the first opening and the second opening at both ends of the exhaust duct.

In a power supply device according to another aspect of the present disclosure, the first plate of the inner case is disposed on an inner side of the side wall, and the second plate is disposed on an outer side of the side wall. The exhaust duct communicates with the inside of the inner case via the first opening, and communicates with the outside of the inner case via the second opening.

With the above structure, the first plate of the inner case is disposed on an inner side of the side wall, and the second plate is disposed on an outer side of the side wall. The exhaust duct communicates with the inside of the inner case via the first opening, and communicates with the outside of the inner case via the second opening. Therefore, an inflow pressure of gas passing the first opening can be easily adjusted by adjusting a sectional area of the cut end formed on the one end of the groove-shaped recess, thereby adjusting an opening area of the first opening. Still more, in the above power supply device, the exhaust duct is formed by the groove-shaped recess of the first plate disposed on the inner side of the side wall. Thus, the exhaust duct can be formed on the side wall without enlarging an outer shape of the inner case.

In a power supply device according to still another aspect of the present disclosure, the inner case includes: a lower case includes a lower-surface plate and first plates connected perpendicularly to both sides of the lower-surface plate, each of the first plates being the first plate; and an upper case including a upper-surface plate and second plates connected perpendicularly to both sides of the upper-surface plate, each of the second plates being the second plate. The lower case and the upper case are connected to each other such that the first plate and the second plate are stacked on each other.

With the above structure, the lower case including the first plate on both sides of the lower-surface plate and the upper case including the second plate on both sides of the upper-surface plate are connected to each other. Therefore, the exhaust duct is simply and easily formed in the sides walls on both sides facing each other in the inner case. Still more, with the above structure, the first opening communicating the exhaust duct with the inside of the inner case is arranged at an upper end of the exhaust duct, and the second opening communicating the exhaust duct with the outside of the inner case is arranged at a lower end of the exhaust duct. Therefore, blowout substances, such as gas, filling the inner case are emitted out of the inner case by passing the blowout substances from the top to bottom of the exhaust duct. This structure of passing blowout substances discharged to inside the inner case from the top to bottom of the exhaust duct has an advantage that even foreign substances such as liquid or metal pieces discharged from the secondary battery cell can be dropped along the exhaust duct to smoothly emit the foreign substances out of the inner case.

In a power supply device according to still another aspect of the present disclosure, the first plate has cut parts and an uncut part which are provided at an end of the first plate, the end of the first plate is partially cut at the cut parts. The one end of the each of the plurality of groove-shaped recesses is formed at a corresponding one of the cut parts. The end of the first plate is not cut at the uncut part. The uncut part is disposed along an inner surface of the second plate. An upper end of the uncut part contacts the upper-surface plate.

With the above structure, the first plate disposed on the inner side forms the first opening with the cut end formed on one end of the groove-shaped recess by partially cutting the cut part at the tip end part. Therefore, while the first opening is simply and easily formed on the first plate, the uncut part not cut by the cut part is arranged along the inner surface of the second plate, and the upper end of the uncut part contacts the upper-surface plate. Thus, the upper case connected to the lower case can be disposed by accurately positioning a vertical position of the upper case with the first plate.

In a power supply device according to still another aspect of the present disclosure, the inner case includes: a lower case including a lower-surface plate and second plates connected perpendicularly to both sides of the lower-surface plate, each of the second plates being the second plate; and an upper case including a upper-surface plate and first plates connected perpendicularly to both sides of the upper-surface plate, each of the first plates being the first plate. The lower case and the upper case are connected to each other such that the first plate and the second plate are stacked on each other.

With the above structure, the lower case including the second plate on both sides of the lower-surface plate and the upper case including the first plate connected to both sides of the upper-surface plate are connected to each other. Therefore, the exhaust duct is simply and easily formed on side walls on both sides facing each other in the inner case. Still more, with the above structure, the first opening communicating the exhaust duct with the inside of the inner case is arranged at the lower end of the exhaust duct, and the second opening communicating the exhaust duct with the outside of the inner case is arranged at the upper end of the exhaust duct. Thus, blowout substances, such as gas, filling the inner case are emitted out of the inner case by passing the blowout substances from the bottom to top of the exhaust duct.

In a power supply device according to still another aspect of the present disclosure, the first plate has cut parts and an uncut part which are provided at an end of the first plate, the end of the first plate being partially cut at the cut parts, the one end of the each of the plurality of groove-shaped recesses being formed at a corresponding one of the cut parts, the end of the first plate not being cut at the uncut part, the uncut part being disposed along an inner surface of the second plate, a lower end of the uncut part contacting the lower-surface plate.

With the above structure, the first plate disposed on the inner side has the first opening that is the cut end formed on one end of the groove-shaped recess by partially cutting the cut part at the tip end part. Therefore, while the first opening is simply and easily formed in the first plate, the uncut part not cut by the cut part is arranged along the inner surface of the second plate, and the lower end of the uncut part contacts the lower-surface plate. Thus, the upper case connected to the lower case is disposed by accurately positioning the vertical position of the upper case with the first plate.

In a power supply device according to still another aspect of the present disclosure, the first plate of the inner case is disposed on an outer side of the side wall, and the second plate of the inner case is disposed on an inner side of the side wall, and the exhaust duct communicates with the inside of the inner case via the second opening, and communicates with the outside of the inner case via the first opening.

With the above structure, the first plate is disposed on the outer side of the side wall, the second plate is disposed on the inner side of the side wall, the inside the inner case communicates with the exhaust duct via the second opening, and the exhaust duct communicates with the outside of the inner case via the first opening. Thus, an inflow pressure of gas passing the second opening is easily adjusted by adjusting an opening area of the second opening formed inside the inner case by the closing state of the second opening that closes the other end of the groove-shaped recess.

In a power supply device according to still another aspect of the present disclosure, the inner case includes: a lower case including a lower-surface plate and second plates connected perpendicularly to both sides of the lower-surface plate, each of the second plates being the second plate; and an upper case including a upper-surface plate and first plates connected to both sides of the upper-surface plate, each of the first plates being the first plate. The lower case and the upper case are connected to each other such that the first plate and the second plate are stacked on each other.

With the above structure, the exhaust duct is simply and easily formed in the side walls on both sides facing each other in the inner case by connecting, to each other the lower case including the second plates on both sides of the lower-surface plate and the upper case including the first plates on both sides of the upper-surface plate. Still more, with the above structure, the second opening communicating the exhaust duct with the inside of the inner case is disposed at the upper end of the exhaust duct, and the first opening communicating the exhaust duct with the outside of the inner case is disposed at the lower end of the exhaust duct. Therefore, blowout substances, such as gas, filling the inner case can be emitted out of the inner case by passing the blowout substances from the top to bottom of the exhaust gas. This structure of passing the blowout substances discharged to the inside of the inner case from the top to bottom of the exhaust duct has an advantage that even foreign substances such as liquid or metal pieces discharged from secondary battery cell can be dropped along the exhaust duct to smoothly emit the foreign substances out of the inner case.

In a power supply device according to still another aspect of the present disclosure, the second plate has second cut parts and a second uncut part which are provided at an end of the second plate, the end of the second plate being partially cut at the second cut parts, a closed position of the another end of the each of the plurality of groove-shaped recesses being provided at a corresponding one of the second cut parts, the end of the second plate not being cut at the second uncut part, the uncut part being disposed along an inner surface of the first plate, an upper end of the second uncut part contacting the upper-surface plate.

With the above structure, the second plate disposed on the inner side determines the closing position of the other end of the groove-shaped recess by partially cutting the tip end part by the second cut part. Therefore, while simply and easily adjusting the position and size of the second opening, the second uncut part that is not cut by the second cut part is arranged along the inner surface of the first plate and the upper end of the second uncut part is brought into contact with the upper-surface plate. Thus, the upper case connected to the lower case can be disposed by accurately positioning the vertical position of the upper case with the first plate.

In a power supply device according to still another aspect of the present disclosure, the inner case includes: a lower case including a lower-surface plate and first plates connected perpendicularly to both sides of the lower-surface plate, each of the first plates being the first plate; and an upper case including a upper surface plate and second plates connected perpendicularly to both sides of the upper-surface plate, each of the second plates being the second plate. The lower case and the upper case are connected to each other such that the first plate and the second plate are stacked on each other.

With the above structure, the lower case including the first plate on both sides of the lower-surface plate and the upper case including the second plate on both sides of the upper-surface plate are mutually connected. Therefore, the exhaust duct is simply and easily formed in the side walls on both sides facing each other in the inner case. Still more, with the above structure, the second opening communicating the exhaust duct with the inside of the inner case is disposed at the lower end of the exhaust duct, and the first opening communicating the exhaust duct with the outside of the inner case is disposed at the upper end of the exhaust duct. Thus, blowout substances, such as gas, filled inside the inner case can be emitted out of the inner case by passing the blowout substances from the bottom to top of the exhaust duct.

In a power supply device according to still another aspect of the present disclosure, second plate has second cut parts and a second uncut part which are provided at an end of the second plate, the end of the second plate being partially cut at the second cut parts, a closed position of the another end of the each of the plurality of groove-shaped recesses being provided at a corresponding one of the second cut parts, the end of the second plate not being cut at the second uncut part, the uncut part being disposed along an inner surface of the first plate, a lower end of the second uncut part contacting the lower-surface plate.

With the above structure, the second plate disposed on the inner side determines the closing position at the other end of the groove-shaped recess by partially cutting the tip end part by the second cut part. Therefore, while simply and easily adjusting the position and size of the second opening, the second uncut part not cut by the second cut part is arranged along the inner surface of the first plate. The lower end of the second uncut part is brought into contact with the lower-surface plate. Thus, the upper case connected to the lower case is disposed by accurately positioning the vertical position of the upper case with the second plate.

A power supply device according to still another aspect of the present disclosure further includes a battery holder accommodating therein the plurality of secondary battery cells to arrange the plurality of secondary battery cells parallel to one another. The plurality of secondary battery cells are cylindrical batteries. The battery holder has a shape to accommodate therein the plurality of secondary battery cells in a bale-piling layout in a plan view, the battery holder having a side surface facing the side wall of the inner case, the side surface having an uneven shape having ridges and recesses extending in upward and downward directions, the ridges and recesses being arranged alternately. The exhaust duct is disposed in the recesses formed in the side surface of the battery holder.

With the above structure, the battery holder accommodating the cylindrical secondary battery cells in the bale-piling layout in a plan view has an uneven shape on the side surface facing the side wall of the inner case. The exhaust duct is disposed in the recess formed on the side surface of the battery holder. Therefore, space for arranging the exhaust duct can be saved by arranging the exhaust duct in the recess, which is a dead space, formed on the side surface of the battery holder.

In a power supply device according to still another aspect of the present disclosure, the each of the plurality of secondary battery cells has a surface including the exhaust valve, the surface of the each of the plurality of secondary battery cells facing upward.

In a power supply device according to still another aspect of the present disclosure, the second plate has a plurality of second groove-shaped recesses in a surface of the second plate facing the first plate, each of the plurality of groove-shaped recesses extending in a height direction of the side wall, the each of the plurality of groove-shaped recesses having a second cut end at one end of the each of the plurality of second groove-shaped recesses cut in a direction intersecting an extending direction of the each of the plurality of groove-shaped recesses. The plurality of second groove-shaped recesses provided in the second plate face the plurality of groove-shaped recesses provided in the first plate, respectively. The second cut end provided at the each of the plurality of second groove-shaped recesses is disposed at the second opening of the each of the plurality of groove-shaped recesses such that the second plate is stacked on the first plate.

With the above structure, the plurality of second groove-shaped recesses are provided on the second plate that is stacked on the groove-shaped recesses provided on the first plate, and these second groove-shaped recesses are disposed at positions corresponding to the groove-shaped recesses provided on the first plate. The second cut end provided on one end of the second groove-shaped recess is disposed in the second opening. Thus, the opening area of the second opening where the second cut end is disposed can be enlarged while increasing the capacity of the exhaust duct formed between the first plate and the second plate. Still more, the uneven shape provided on the second plate can reinforce the second plate.

Exemplary embodiments of the present disclosure will be described below with reference to the drawings. The exemplary embodiments described herein are illustrative for embodying the technical concept of the present disclosure, and thus the present disclosure is not limited thereto. Still more parts and materials described in the exemplary embodiments do not restrict parts and materials indicated in the scope of claims. In particular, unless otherwise specified, dimensions, materials, shapes, and relative positions of components described in the embodiments are not restrictive and are illustrative. The size and positional relationship of components indicated in the drawings may be exaggerated to clarify the description. Moreover, the same names and reference marks in the description indicate the same or similar components, and their details are omitted as appropriate. In components configuring the present disclosure, a plurality of components may be configured with one component or one component may be used for the plurality of components. Alternatively, a function of one component may be divided into plural components.

The power supply device according to the present disclosure is suitably used for stationary power storage applications, such as a power supply for home-use, office-use, and factory-use power storage systems, a backup power supply for servers, and a power supply for vehicles including hybrid vehicles and electric vehicles. The following exemplary embodiments of the present disclosure describe a power supply device used as a power supply for a power storage system.

### Exemplary Embodiment 1

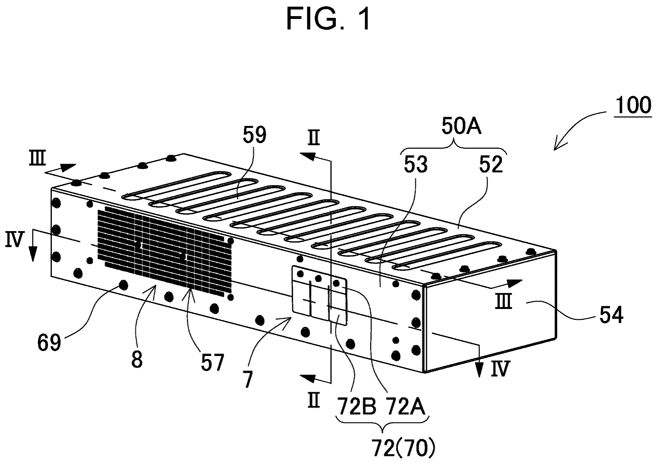

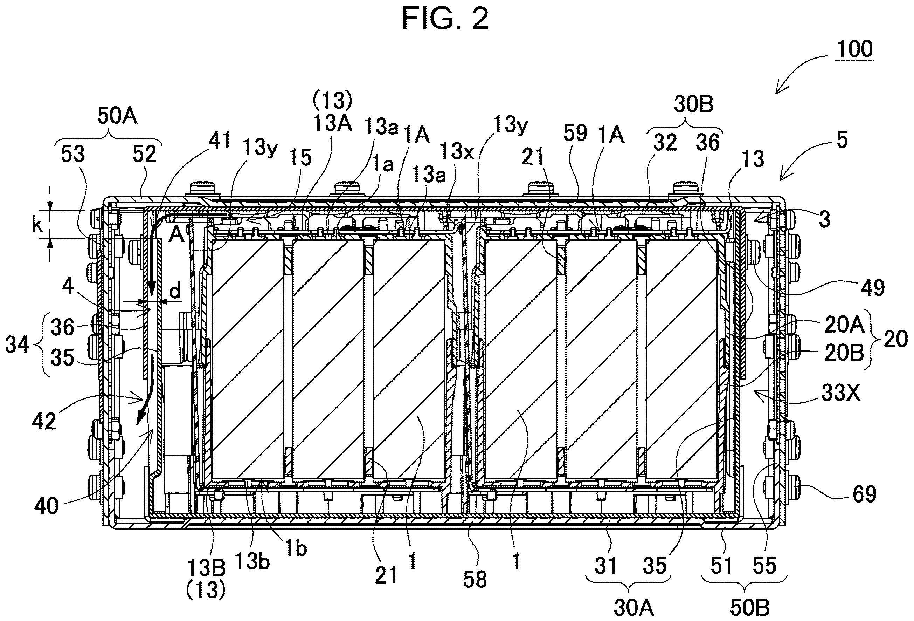

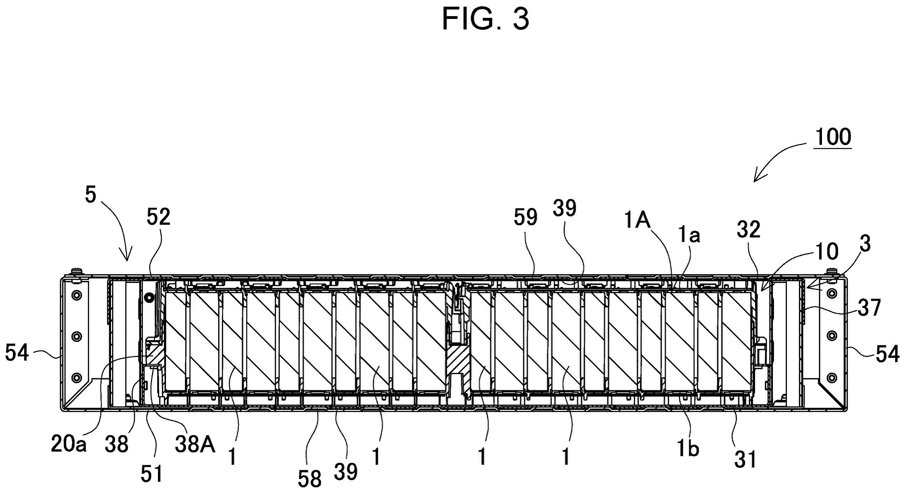

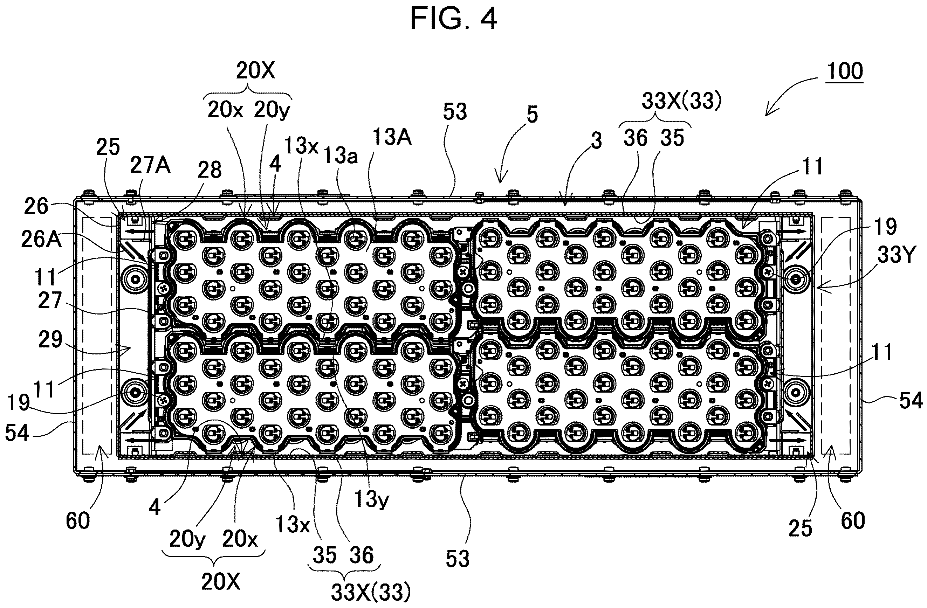

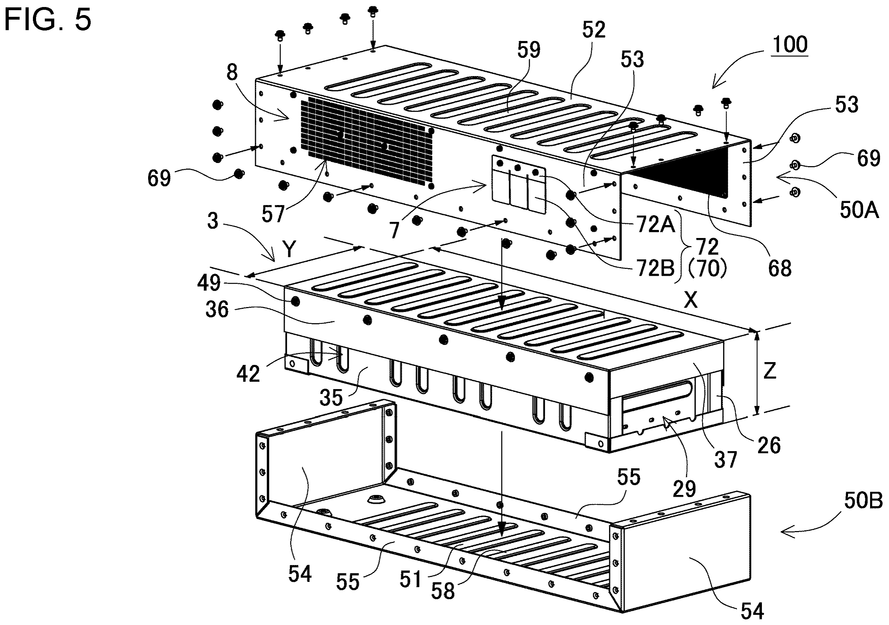

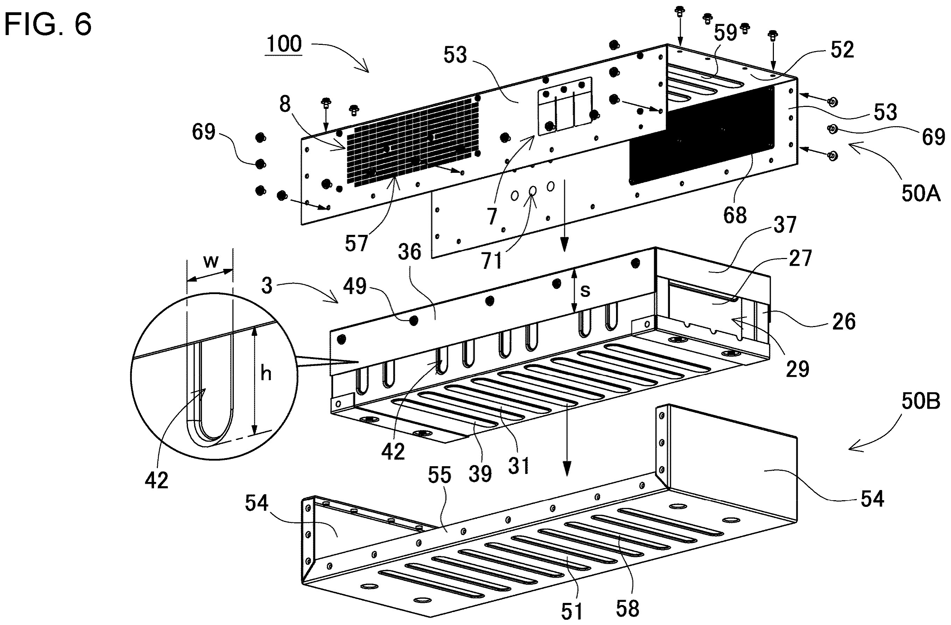

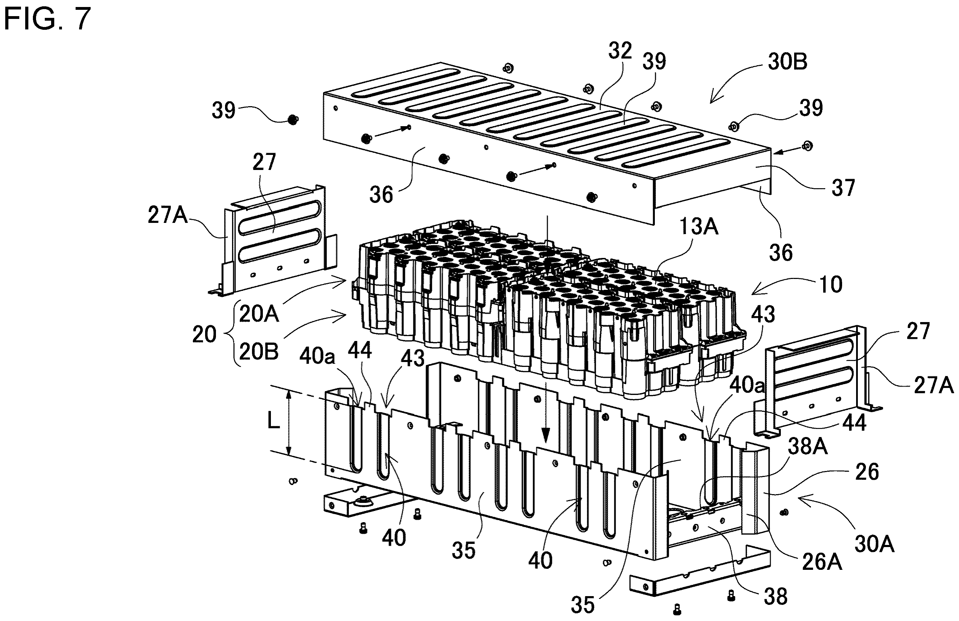

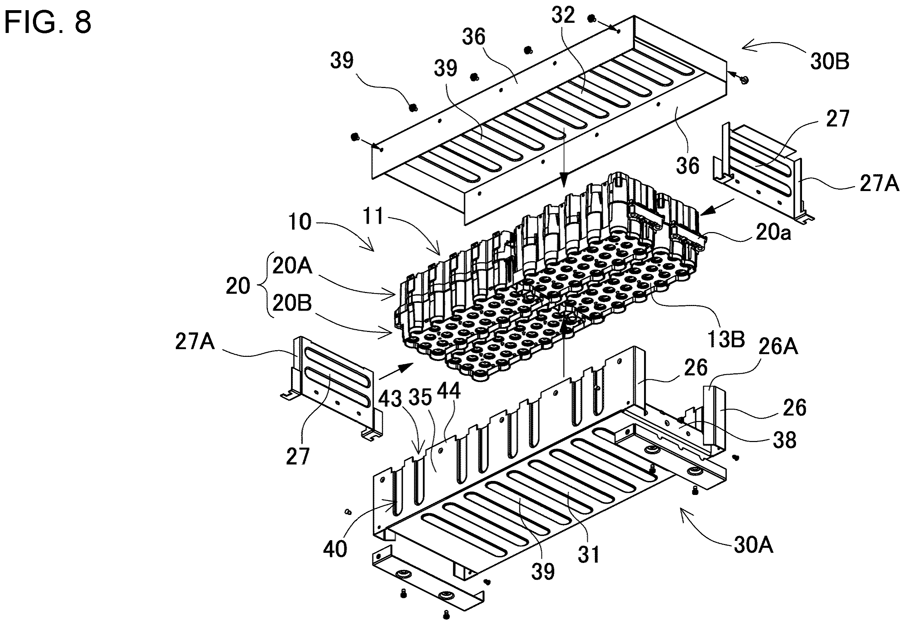

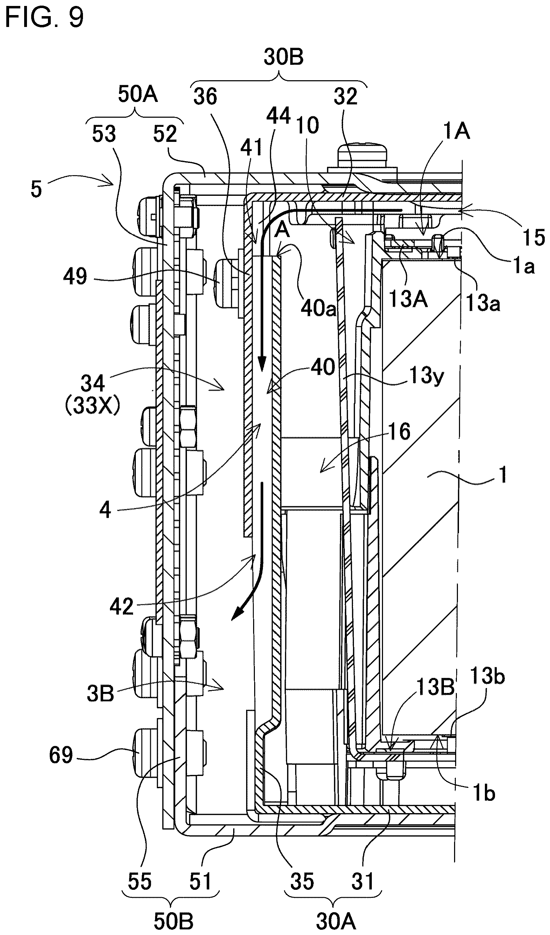

FIGS. 1-9 illustrate a power supply device according to Exemplary Embodiment 1 of the present disclosure. FIG. 1 is a perspective view of the power supply device according to Embodiment 1. FIG. 2 is a sectional view of the power supply device at line II-II shown in FIG. 1. FIG. 3 is a sectional view of the power supply device at line III-III shown in FIG. 1. FIG. 4 is a horizontal sectional view of the power supply device at line IV-IV shown in FIG. 1. FIG. 5 is an exploded perspective of the power supply device shown in FIG. 1. FIG. 6 is an exploded perspective view of the power supply device shown in FIG. 5 viewed from bottom. FIG. 7 is an exploded perspective view of an inner case. FIG. 8 is an exploded perspective view of the inner case shown in FIG. 7 viewed seen from bottom. FIG. 9 is an enlarged magnified sectional view of the device for illustrating an exhaust duct of the inner case.

Power supply device 100 illustrated in the drawings includes secondary battery cells 1 each including an exhaust valve configured to open when an internal pressure thereof exceeds a predetermined pressure, inner case 3 accommodating the secondary battery cells, and outer case 5 covering inner case 3. Inner case 3 includes first plate 35 and second plate 36 constituting side wall 33X. First plate 35 and second plate 36 extend in an extending direction of inner case 3, and are partially stacked on each other in an intermediate region between the top and bottom of side wall 33X to form stacked part 34. First plate 35 includes groove-shaped recesses 40 in a surface of first plate 35 facing second plate 36. Groove-shaped recesses 40 extend in a height direction of side wall 33X. First opening 41 that is cut end 40a formed by cutting one end of each of groove-shaped recesses 40 in a direction intersecting an extending direction of the groove-shaped recess 40. While being stacked on first plate 35, second plate 36 closes the one end where first opening 41 of each of the groove-shaped recesses is formed, thereby forming tubular exhaust duct 4 in stacked part 34, and leaves another end of each of groove-shaped recesses 40 open and unclosed, thereby forming second opening 42. Exhaust duct 4 communicates with an inside and an outside of inner case 3 via first opening 41 and second opening 42.

In power supply device 100 of the present disclosure, secondary battery cells 1 are accommodated in inner case 3, and inner case 3 is covered with outer case 5. In particular, a temperature and pressure of blowout substances, such as gas, discharged from secondary battery cells 1 are reduced in inner case 3 and promptly emitted outside. Hereafter, a structure of inner case 3 will be detailed, giving an example, with respect to a mode of accommodating secondary battery cells 1 in inner case 3 and a mode of outer case 5 covering inner case 3.

### Secondary Battery Cell 1

In power supply device 100 illustrated in FIGS. 2, 4, 7, and 8, the secondary battery cells are accommodated in inner case 3. Each secondary battery cell is a cylindrical secondary battery having a cylindrical outer can. In secondary battery cell 1 having a cylindrical shape, an electrode body is accommodated in a bottomed cylindrical metal outer can, electrolyte fills the outer can, and an opening of the outer can is air-tightly crimped with a sealing body. The sealing body is air-tightly fixed onto the outer can via an insulating material, and includes an exhaust valve configured to discharge blowout substances, such as gas, when an internal pressure of the battery applied to the sealing body becomes higher than a predetermined pressure. Positive and negative electrodes are provided at both ends in a longitudinal direction of cylindrical secondary battery cell 1. In secondary battery cell 1, an end surface closed with the sealing body is first end surface 1A, and one electrode is a central electrode provided at the center of the sealing body, and another electrode is an end electrode on a bottom surface of the outer can.

For this type of secondary battery cell 1, a nonaqueous-electrolyte secondary battery having high energy efficiency, such as a lithium-ion secondary battery, is preferably used. However, in the power supply device of the present disclosure, the secondary battery cell is not limited to the lithium-ion secondary battery. Any rechargeable batteries, including a nickel-hydrogen battery and a nickel-cadmium battery, may be used for the secondary battery cell.

### Battery Holder 20

Secondary battery cells 1 are arranged at fixed positions in a predetermined direction via battery holder 20. Secondary batteries 1 are arranged in a vertical orientation with first end surfaces 1A facing upward and parallel to each other. Battery holder 2 has holders 21 accommodating therein secondary battery cells 1, and covering and holding ends of secondary battery cells 1. Each secondary battery cell 1 is held at a fixed position via holder 21. Battery holder 20 in FIGS. 2, 7, and 8 is divided into first holder 20A and second holder 20B at the middle of secondary battery cell 1 in the longitudinal direction, so that secondary battery cells 1 are held from both ends to secure secondary battery cells 1 at the fixed positions. Battery holder 20 shown in FIG. 2 holds secondary battery cells 1 arranged with first end surfaces 1A on the same plane and parallel to each other.

Battery holder 20 illustrated in FIGS. 7 and 8 includes holders 21 accommodating therein secondary battery cells 1 in a bale-piling layout in a plan view. In a structure of arranging secondary battery cells 1 in the bale-piling layout, secondary battery cells 1 in an adjacent row may be placed in a recessed space between linearly arranged secondary battery cells 1, and thus it is a space-saving layout. Therefore, the above battery holder 20 efficiently accommodates numerous secondary battery cells 1 therein with high capacity.

In particular, in battery holder 20 illustrated in FIG. 4, rows of secondary battery cells 1 are linearly arranged in a shorter side direction of inner case 3 having a shape extending in the longitudinal direction. For battery rows arranged in the longer side direction of inner case 3, adjacent rows of secondary battery cells 1 are arranged in the bale-piling layout to each other. Battery holder 20 having this shape has protrusion 20x and recess 20y alternately provided on both side surfaces 20X along an inner surface of side wall 33X extending in the longitudinal direction of inner case 3. In this power supply device 100, vertically extending protrusion 20x and recess 20y are located at side surface 20X of battery holder 20 by arranging battery rows in a zig-zag manner to achieve the bale-piling layout of secondary battery cells 1. In this battery holder 20, exhaust duct 4, described later, of inner case 3 is disposed in recess 20y formed in side surface 20X. In battery holder 20 accommodating secondary battery cells 1 in multiple rows and stages, holder 20 is made by molding resin into the shape of holders 21 connected in multiple rows and stages. Battery holder 20 is preferably made of a material with good insulation and heat resistance such as resin including polycarbonate and ABS.

### Battery pack 10

Secondary battery cells 1 are arranged at fixed positions in battery holder 20 to configure battery block 11, and a plurality of battery blocks 11 is connected as battery pack 10 housed in inner case 3. Battery pack 10 in FIG. 4 includes four battery blocks 11 arranged in a front-back direction and a left-right direction. Each of battery blocks 11 includes 30 secondary battery cells. In entire battery pack 10, 120 secondary battery cells 1 are arranged. Battery block 11 shown in FIG. 4 includes 30 secondary battery cells 1 arranged in ten rows in the left-right direction, with three secondary battery cells 1 per row in the front-back direction. These ten rows of secondary battery cells with three secondary battery cells 1 per row are arranged in a zig-zag manner in the left-right direction to achieve the bale-piling layout.

### Lead Plate 13

Secondary battery cells 1 accommodated in battery holder 20 are connected to one another via lead plates 13 on surfaces of battery holder 20 vertically facing each other, as illustrated in FIGS. 4, 7, and 8. In battery block 11 illustrated in the drawings, 30 secondary battery cells 1 are connected in parallel to one another via two lead plates 13 disposed vertically. Lead plate 13 includes first lead plate 13A that connects central electrodes 1a of all secondary battery cells 1 configuring battery block 11 on a top surface side of battery holder 20 to one another, and second lead plate 13B that connects end electrodes 1b of all secondary battery cells 1 configuring battery block 11 on a bottom surface side of battery holder 20 to one another.

First lead plate 13A has an exposure window therein to expose central electrode 1a from a flat main body, as illustrated in FIGS. 2 and 4, and first connecting tab 13a is provided on this exposure window. First lead plate 13A is connected to central electrode 1a of secondary battery cell 1 facing first connecting tab 13a, so that all secondary battery cells 1 are connected in parallel to one another. First lead plate 13A includes connectors 13x protruding from one side end of the main body. Connectors 13x are exposed from protrusions 20x on side surface 20X where uneven shape of battery holder 20 is formed. Adjacent battery blocks 11 are connected in series to each other via these connectors 13x or connected to an output line on first lead plate 13A.

Second lead plate 13B has an exposure window therein to expose end electrode 1b from the flat main body, as illustrated in FIG. 2, and second connecting tab 13b is provided on this exposure window. Second lead plate 13B is connected to end electrode 1b of secondary battery cell 1 facing second connecting tab 13b, so that all secondary battery cells 1 are connected in parallel to one another. Still more, second lead plate 13B includes protruding connectors 13y that protrude from one side end of the main body and extend from a bottom surface side to a top surface side of battery holder 20. Protruding connectors 13y are disposed in recesses 20y on side surface 20X where uneven shape of battery holder 20 is formed. Adjacent battery blocks 11 are connected in series to each other via protruding connectors 13y or connected to an output line on second lead plate 13B.

As described above, in four battery blocks 11 including all secondary battery cells 1 arranged and connected in parallel to one another, battery blocks 11 adjacent to each other in the front-back direction are connected in series to each other via connector 13x and protruding connector 13y facing each other. In addition, battery blocks 11 adjacent to each other in the left-right direction are connected in series to each other with connector 13x and protruding connector 13y exposed, via a coupling bus bar, on a side of one side wall of inner case 13. Still more, connector 13x and protruding connector 13y exposed on a side of the other side wall of inner case 3 are connected to the output line. 120 secondary battery cells 1 thus establish 30 parallel connections and 4 series connections in entire battery pack 10. Lead plate 13 and the coupling bus bar are made of metal plates, such as nickel and aluminum, with high conductivity. However, the present disclosure does not limit the connection state of secondary battery cells to the above state. With respect to the battery pack, the number of secondary battery cells configuring each battery block and their layout may be changed and a layout of battery blocks may be changed.

### Inner Case 3

Inner case 3 illustrated in FIGS. 5-9 is made of metal, and has a box shape with lower-surface plate 31 and upper-surface plate 32 which are connected to each other with outer peripheral wall 33. Battery pack 10 including secondary battery cells 1 is accommodated in inner case 3. Inner case 3 made of metal plates includes, in outer peripheral wall 33, first plate 35 and second plate 36 constituting side walls 33X facing each other. First plate 35 and second plate 36 extend in the extending direction of inner case 3, and are partially stacked on each other in an intermediate region between the top and bottom of side wall 33X to form stacked part 34.

In inner case 3 illustrated in FIGS. 7 and 8, one first plate 35 forming stacked part 34 has an uneven shape on a surface of first plate 35 facing second plate 36. The surface of first plate 35 has groove-shaped recesses 40 therein extending in the height direction of side wall 33X. Second plate 36 forming stacked part 34 is flat. In first plate 35, cut end 40a formed by horizontally cutting one end of groove-shaped recess 40 in a direction intersecting the extending direction of groove-shaped recess 40, i.e., horizontal direction in the drawings, is defined as first opening 41. In first plate 35 illustrated in FIGS. 7 and 8, an end of first plate 35 is partially cut by cut parts 43, and uncut portions are uncut parts 44 for determining the height of side wall 33X. A bottom end of groove-shaped recess 40 extends to a bottom end of first plate 35, and a bottom end part of groove-shaped recess 40 has an arc shape.

In this side wall 33X, second plate 36 partially closes tip ends of groove-shaped recesses 40 provided in first plate 35 while second plate 36 is stacked on first plate 35, and the bottom ends of groove-shaped recesses 40 are partially left open without completely closing the bottom ends. Stacked part 34 forms tubular exhaust duct 4 by partially closing groove-shaped recesses 40 provided in first plate 35 by second plate 36. In addition, the tip end of groove-shaped recess 40 opens at cut part 43 to form first opening 41, and an area unclosed by second plate 36 on a side of a lower end of groove-shaped recess 40 partially open to form second opening 42. Stacked part 34 having a stacking structure of first plate 35 having groove-shaped recesses 40 therein and second plate 36 forms exhaust duct 4 on side wall 33X. Exhaust duct 4 communicates with the inside and outside of inner case 3 via first opening 41 and second opening 42.

In inner case 3 illustrated in FIG. 2 and FIGS. 7-9, first plate 35 is disposed on an inner side of side wall 33X and second plate 36 is disposed on an outer side of side wall 33X. Inner case 3 illustrated in FIGS 2, 7, and 8 includes lower case 30A including lower-surface plate 31and first plates 35 perpendicularly to both sides of lower-surface plate 31, and upper case 30B including upper-surface plate 32and second plates 36 connected perpendicularly to both sides of upper-surface plate 32. In inner case 3 having this structure, groove-shaped recesses 40 extending in the vertical direction are provided in an outer surface of first plate 35 of first case 30A. First opening 41 is a cut portion at an upper end of each of groove-shaped recesses 40. In inner case 3 having this structure, exhaust duct 4 is formed in stacked part 34 by partially closing one end where first opening 41 of each of groove-shaped recesses 40 is formed by stacking second plate 36 of second case 30B on the outer side of first plate 35 of first case 30. Another end of each of groove-shaped recesses 40 partially opens to form second opening 42. Exhaust duct 4 communicates with the inside of inner case 3 via first opening 41, and communicates with the outside of inner case 3 via second opening 42.

In inner case 3, first opening 41 allowing exhaust duct 4 to communicate with the inside of inner case 3 is disposed at an upper end of exhaust dust 4, and second opening 42 allowing exhaust duct 4 to communicate with the outside of inner case 3 is disposed at a lower end of exhaust duct 4. Therefore, blowout substances, such as gas, filling inner case 3 pass through exhaust duct 4 from the top to bottom and are emitted out of inner case 3. As described above, the structure of passing blowout substances discharged to inner case 3 from the top to bottom of the exhaust duct 4 has an advantage that even foreign substances such as liquid or metal pieces discharged from secondary battery cell 1 drop along exhaust duct 4 to smoothly emit the foreign substances out of inner case 3.

In second case 30B, second plate 36 is stacked on the outer side of first plate 35 of first case 30A. Upper-surface plate 32 contacts the upper end of uncut part 44 provided on the upper end of first plate 35, so that a connecting position of second case 30B is determined, thereby determining a closing position of groove-shaped recesses 40 by second plate 36. In inner case 3, a depth of cut part 43 provided in first plate 35 determines distance (k) between an opening position of first opening formed on the inner side of inner case 3 and upper-surface plate 32.

In inner case illustrated in FIGS. 5-8, side walls 33X facing each other include exhaust ducts 4. Exhaust ducts 4 may have the same shape and size by, for example, the same vertical width (L) and horizontal width (W) of groove-shaped recesses 40 equal. Exhaust ducts 4 may be arranged at predetermined intervals. Exhaust ducts 4 is disposed at positions facing recesses 20y formed in side surface 20X of battery holder 20 housed inside. Exhaust ducts 4 facing recesses 20y of battery holder 20 allow exhaust ducts 4 to be provided on side wall 33X without enlarging the outer shape of inner case 3. The exhaust ducts arranged in a balanced manner allows gas filling inner case 3 to be efficiently and smoothly emitted outside.

Groove-shaped recesses 40 are formed in first plate 35 made of a metal plate by drawing. First plate 35 illustrated in FIG. 2 has groove-shaped recesses 40 therein by drawing a surface of first plate 35 facing second plate 36, so as to have a predetermined depth. Depth (d) of groove-shaped recess 40 ranges, for example, from 3 mm to 10 mm. Groove-shaped recesses 40 illustrated in FIGS. 7 and 8 extend in the vertical direction of first plate 35, and has a predetermined horizontal width (W) and a vertical width (L). Vertical width (L), horizontal width (W), and depth (d) of groove-shaped recess 40 forming exhaust duct 4 are adjusted to adjust the volume of exhaust duct 4.

The vertical width (L) of recess 40 forming exhaust duct 4 ranges from 60% to 90% of height (Z) of outer peripheral wall 33, and for example, from 10 cm to 25 cm. The horizontal width (W) of recess 40 is a length that can be put in recess 20y formed in side surface 20X of battery holder 20 accommodated in inner case 3. For example, the horizontal width (W) may range from 0.6 to 1.5 times of an outer diameter of cylindrical secondary battery cell 1. Groove-shaped recesses 40 provided in side wall 33X of inner case 3 may face all recesses 20y or some of recesses 20y of battery holders 20 housed inside. In inner case 3 illustrated in FIGS. 5-8, an opening length (h) of second opening 42 may be adjusted by adjusting a closing length (s) that second plate 36 stacked on first plate 35 closes groove-shaped recesses 40. The closing length (s) of second plate 36 is preferably determined to close an area of 50% to 90% of the vertical length (L) of groove-shaped recess 40.

In lower case 30A, first plates 35 are connected to both sides of lower-surface plate 31 where battery assemblies 10 is to be placed, and fixing piece 38 for connecting closure plates 27 that form exhaust path 25 are connected to both ends of lower-surface plate 31. Both ends of the first plate are bent inward to provide collision plate 26 and bent plate 26A for forming exhaust path 25. A tip end of fixing piece 38 is bent inward in a horizontal attitude, and includes fixing part 38A to fix battery holders 20 of battery assembly 10. Battery assembly 10 is fixed onto fixing part 38A of fixing piece 38 via screw 19 passing through boss 20a provided in battery holder 20. In lower case 30A illustrated in FIG. 8, lower-surface plate 31 includes ridges 39 for reinforcement. Ridges 39 protruding have downward with respect to the flat main body of lower-surface plate 31, and extend in a width direction intersecting the extending direction of side wall 33X in a plan view. Ridges 39 are provided at an equal interval parallel to one another. Lower case 30A described above is formed by cutting a metal plate into a predetermined shape, forming groove-shaped recesses 40 in first plate 35 by drawing, forming ridges 39 on lower-surface plate 31, and bending first plate 35, collision plate 26, and fixing piece 38 to predetermined attitudes with respect to lower-surface plate 31.

In upper case 30B, second plates 36 are connected perpendicularly to both sides of upper-surface plate 32, and end plates 37 are connected perpendicularly to both ends of upper-surface plate 32. In upper case 30B illustrated in the drawings, upper-surface plate 32 is reinforced by ridges 39. Ridges 39 protrude upward with respect to a main body of flat upper-surface plate 32, and extend in the width direction intersecting the extending direction of side wall 33X in a plan view. Ridges 39 are provided at equal intervals in parallel to one another. Upper case 30B is formed by cutting a metal plate into a predetermined shape, drawing to form ridges 39 on lower-surface plate 32, and bending second plate 36 and end plate 37 to achieve a predetermined attitude with respect to upper-surface plate 32.

Inner case 3, as illustrated in FIG. 2, is formed by stacking second plate 36 of upper case 30B on the outer side of first plate 35 provided on lower case 30A, and connecting lower case 30A to upper case 30B. This structure simply and easily provides the stacking structure of side wall 33X to form exhaust duct 4 in stacked part 34 by connecting lower case 30A including first plates 35 on both sides thereof to upper case 30B including second plates 36 on both sides thereof, respectively. First plate 35 and second plate 36 stacked on each other are screwed with screw 49 for firm fixing in close contact. Furthermore, upper case 30B illustrated in the drawing is reinforced by arranging end plate 37 connected perpendicularly to one end of upper-surface plate 32 on the outer side of collision plate 26 provided on lower case 30A.

Inner case 3 includes exhaust path 25 having a collision structure on end wall 33Y facing outer peripheral wall 33, and exhaust path 25 communicates with the inside of inner case 3. Exhaust path 25 having the collision structure illustrated in FIG. 4 includes a pair of collision plates provided on both sides of the end face of inner case 3, and closure plate 27 provided toward the side of battery assembly 10 from collision plates 26 and having space 28 between both side walls 33X while being fixed onto fixing pieces 38. The pair of collision plates 26 have bent part 26A having tip end part at the center bent inward. Closure plate 27 has bending piece 27A having both ends bent toward collision plate 26. Exhaust path 25 having this structure allows gas passing space 28 between bending piece 27A of closure plate 27 and side wall 33X to collide with collision plate 26, and allows gas whose flowing direction has been changed by collision plate 26 to change the direction to the side of closure plate 27 by bent part 26A of collision plate 26. Then, gas is released outside from wiring space 29 opening the end face. Exhaust path 25 prevents blowout substances, such as gas, discharged from secondary battery cells 1 from becoming a linear flame emitted out of inner case 3 by nonlinearly meandering lead wire and output line led out from battery assembly 10 and guiding the blowout substances to the outside of inner case 3.

In power supply device 100 illustrated in FIGS. 2 and 3, secondary battery cells 1 accommodated in inner case 3 are arranged such that first end surface 1A including the exhaust valve facing upward. Groove-shaped recesses 40 formed in first plate 35 of side wall 33X extend vertically. First opening 41 is provided in an upper end part of side wall 33X, and second opening 42 is provided in a lower part of side wall 33X. In secondary battery cells 1 arranged to have the exhaust valves facing upward, blowout substances discharged from the top surface side of battery assembly 10 are released as follows when the blowout substances, such as gas, are discharged due to a failure of any of secondary battery cells 1. As indicated by arrow A in FIGS. 2 and 9, the blowout substances flow toward side wall 33X through upper space 15 formed between the top surface of battery assembly 10 and upper-surface plate 32 of inner case 3, then are guided from first opening 41 provided in the upper end part of side wall 33X to exhaust duct 4, and promptly emitted. High temperature and high pressure gas and foreign substances discharged from secondary battery cell 1 in an abnormal state are promptly emitted out of inner case 3 to reduce detrimental effects on surrounding secondary battery cells 1.

### Outer Case 5

Outer case 5, as illustrated in FIGS. 1 to 6, has a box shape with a hollow inside to accommodate inner case 3 accommodating battery assembly 10. Outer case 5 in the drawings are made of metal plates connected to one another . In an example illustrated in exploded perspective views of FIGS. 5 and 6, an entire outer shape of outer case 5 is a rectangular box shape formed by connecting lower-surface plate 51 and upper-surface plate 52 facing each other, side plates 53 on both sides, and end plates 54 on both ends.

Outer case 5 illustrated in FIGS. 5 and 6 includes first case 50A including upper-surface plate 52 and side plates 53 connected perpendicularly to both sides of upper-surface plate 52, and second case 50B including lower-surface plate 51 and end plates 54 connected perpendicularly to both ends of lower-surface plate 51. Second case 50B illustrated in the drawings has fixing pieces 55 provided on both sides of lower-surface plate 51 and around end plates 54 for connecting first case 50A with screws. In this outer case, an outer periphery of first case 50A is screwed to fixing piece 55 of second case 50B with screws 69 to connect first case 50A to second case 50B while first case 50A is put over second case 50B. First case 50A and second case 50B connected to each other provide an accommodating space accommodating inner case 3 inside outer case 5.

Outer case 5 illustrated in FIGS. 5 and 6 includes ridges 58 on lower-surface plate 51. Ridges 58 on lower-surface plate 51 protrude upward with respect to the flat main body of lower-surface plate 51, and extend in a shorter side direction of outer case 5. Ridges 58 is provided in parallel to one another. In particular, ridges 58 protruding upward from lower-surface plate 51 alternately face ridges 39 protruding downward from lower-surface plate 31 of inner case 3. In this structure, ridges 58 protruding upward from lower-surface plate 51 of outer case 5 are disposed in respective recesses formed between ridges 39 protruding downward from lower-surface plate 31 of inner case 3. Thus, the outer shape of outer case 5 is suppressed from being enlarged while reinforcing outer case 5.

Outer case 5 illustrated in FIGS. 5 and 6 includes ridges 59 on upper-surface plate 52. Ridges 59 on upper-surface plate 52 protrude downward with respect to the flat main body of upper-surface plate 52, and extend in the shorter side direction of outer case 5. Ridges 59 is provided in parallel to one another. In particular, ridges 39 protruding downward from upper-surface plate 52 alternately face stepped even parts 39 protruding upward from upper-surface plate 32 of inner case 3. In this structure, stepped uneven pats 59 protruding downward from upper-surface plate 52 of outer case 5 are disposed in recesses formed between ridges 39 protruding upward from upper-surface plate 32 of inner case 3. Thus, the outer shape of outer case 5 is suppressed from being enlarged while reinforcing outer case 5.

### Check Valve 7

Outer case 5 further includes check valve 7 configured to discharge blowout substances, such as gas and foreign substances, filling outer case 5 in a state high temperature and high pressure gas and foreign substances are discharged from secondary battery cell 1 accommodated inside. In power supply device 100 illustrated in FIG. 1 and FIGS. 4-6, check valve 7 is provided in each of side plates 53 facing each other in outer case 5. Check valves 7 are provided at point-symmetric positions of outer case 3 in a plan view. Check valves 7 are configured to open when an internal pressure of outer case 5 increases and to close when the internal pressure decreases.

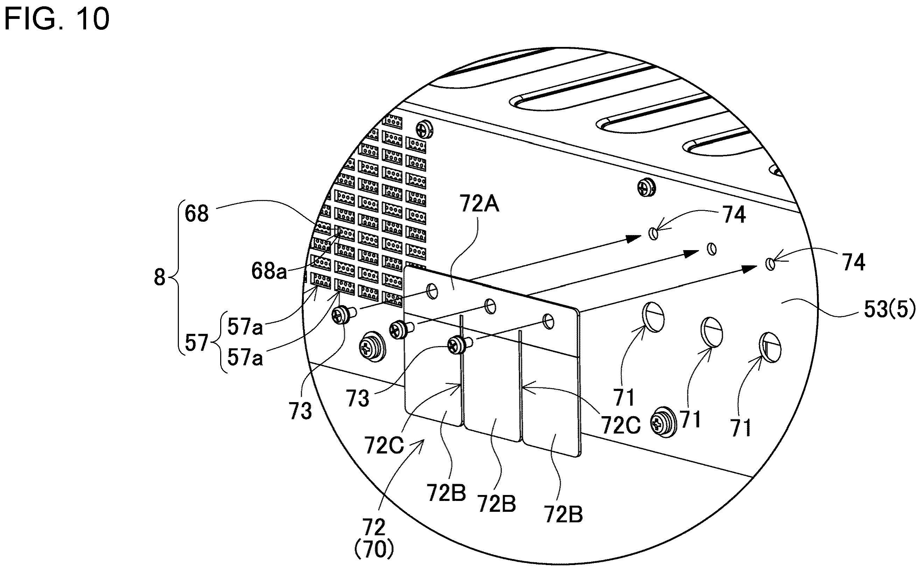

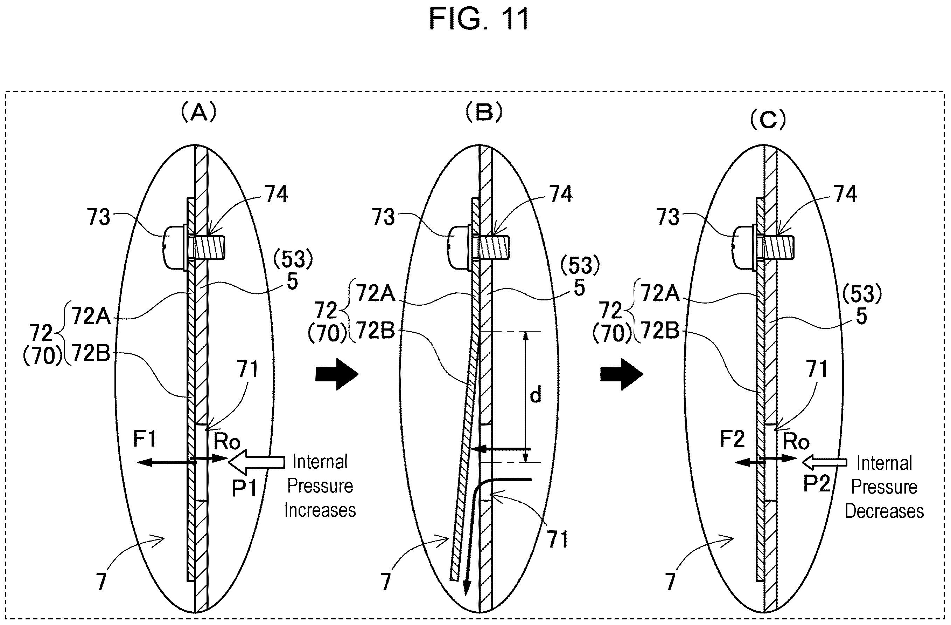

Check valve 7 illustrated in FIGS. 10 and 11 includes discharge window 71 opening in a part of outer case 5, and closing mechanism 70 configured to open and close discharge window 71. Closing mechanism 70 is configured to open discharge window 71 when the internal pressure of outer case 5 is increased, so as to allow blowout substances, such as gas and foreign substances, filling inside pass through opened discharge window 71 to discharge the blowout substances outside outer case 5. Closing mechanism 70 is configured to close discharge window 71 when the internal pressure of outer case 5 decreases by discharging blowout substances, such as gas and foreign substances, from inside so as to prevent entry of air from outside.

Closing mechanism 70 illustrated in FIGS. 10 and 11 is leaf spring 72. Part of leaf spring 72 that is closing mechanism 70 is fixed near discharge window 71 to openably and closeably close discharge window 71. Leaf spring 72 illustrated in the drawings includes fixing part 72A fixed onto outer case 5, and closing part 72B extending from fixing part 72A to resiliently close discharge window 71. Fixing part 72A of leaf spring 72 is, for example, fixed at a fixed position on outer case 5 with fixing screw 73 passing through fixing part 72A onto fixing hole 74 provided in outer case 5. In check valve 7 illustrated in the drawings, discharge window 71 opening in outer case 5 has a round shape, and closing part 72B that closes discharge window 71 has a rectangular shape that can cover round discharge window 71. This structure allows round discharge window 71 to be securely closed by rectangular closing part 72B. However, shapes of discharge window 71 and closing part 72B are not limited to the above shapes, and various shapes are applicable.

In closing mechanism 70 that is leaf spring 72, as illustrated in FIG. 11, when internal pressure (P1) of outer case 5 increases (FIG. 11(A)) due to blowout substances from secondary battery cell 1 in a state closing part 72B closes discharge window 71, outward force (F1) applied to closing part 72B from internal gas increases in discharge window 71. When this force (F1) exceeds elastic pressing force (Ro) of leaf spring 72 acting on closing part 72B, leaf spring 72 deforms and closing part 72B is removed from discharge window 71 to open discharge window 71 (FIG. 11(B)). In this state, blowout substances, such as gas and foreign substances, from inside outer case 5 pass discharge window 71 that has opened, and are emitted out of outer case 5. When gas and foreign substances from inside outer case 5 are emitted and internal pressure (P2) of outer case 5 decreases, outward force (F2) applied by internal gas decreases in discharge window 71. When force (F2) becomes smaller than elastic pressing force (Ro) of leaf spring 72 acting on closing part 72B, leaf spring 72 recovers its original shape, closing part 72B closes discharge window 71 (FIG. 11(C)), and prevents entry of air from outside.

Check valve 7 illustrated in FIG. 10 includes three aligned discharge windows 71, and closing mechanism 70 that is leaf spring 72 including three closing parts 72B arranged facing discharge windows 71, respectively, with respect to fixing part 72A fixed onto outer case 5. In leaf spring 72, closing parts 72B that close three discharge windows 71 extend from fixing part 72A, and each closing part 72B elastically closes corresponding discharge window 71 in a state fixing part 72A is fixed onto outer case 5. In leaf spring 72 illustrated in the drawings, closing parts 72B extending from fixing part 72A are separated from one another via slits 72C, and three strip-like closing parts 72B are connected to fixing part 72A. Leaf spring 72 having this structure allows closing parts 72B to close corresponding discharge windows 71 in the state fixing part 72A is fixed onto outer case 5.

Check valve 7 having this structure allows discharge windows 71 to open according to an increase of internal pressure of outer case 5 when gas and foreign substances are discharged from secondary battery cell 1. Therefore, a large amount of blowout substances, such as gas and foreign substances, may be discharged by opening check valves 7 according to the amount of gas and foreign substances discharged from secondary battery cells 1.

In check valve 7 described above, closing part 72B includes one leaf spring 72 split to close discharge windows 71 aligned and opened. However, leaf spring 72 may be provided for each discharge window 71. For example, three leaf springs may be arranged for three discharge windows. In this case, the discharge windows are not necessarily aligned. Check valve 7 including one discharge window 71 and one leaf spring 72 may be arranged in a dispersed manner on the outer peripheral wall. This structure allows internal gas to be released effectively by opening check valve 7 provided on a part corresponding to an area with particularly intense high internal pressure inside outer case 5.

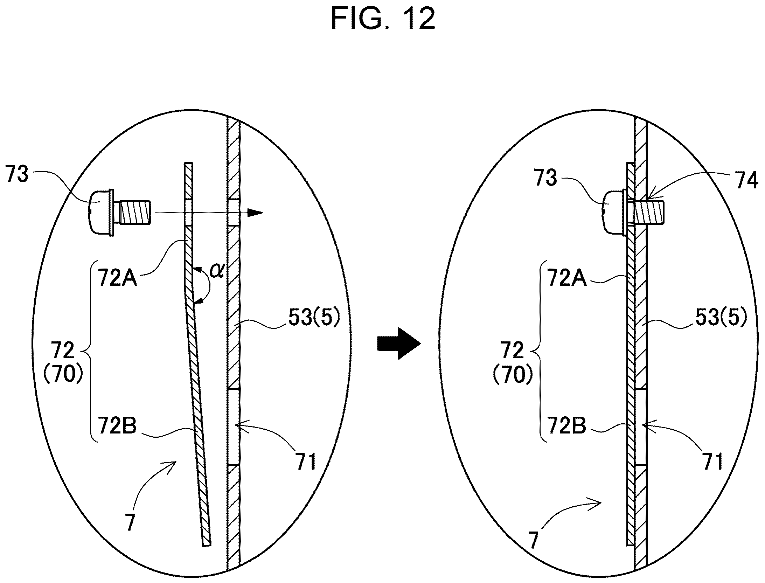

Closing mechanism 70 that is leaf spring 72 is preferably held to be urged such that closing part72B elastically closes discharge window 71 in the state fixing part 72A of leaf spring 72 is fixed onto outer case 5. To achieve this, for example, in closing mechanism 70 that is leaf spring 72, closing part 72B deforms to have predetermined angle (α) with respect to fixing part 72A, as illustrated in FIG. 12, when fixing part 72A is fixed onto outer case 5. Thus, closing part 72B is held to be urged to elastically close discharge window 71 even when leaf spring 72 is arranged on the surface of outer case 5 in a flat state. This structure holds the state of closing discharge window 71 by closing part 72B in the closed state of check valve 7.

Leaf spring 72 constituting closing mechanism 70 described above is made of iron spring material (spring steel), stainless steel spring material, or copper spring material. Leaf spring 72 has a thickness ranging from 0.5 mm to 1.0 mm, depending on the shape, and closing part 72B is elastically urged toward discharge window 71.

### Exhaust Port 8

Outer case 5 further includes exhaust port 8 on part of its outer surface to pass gas, so that blowout substances, such as gas, discharged from secondary battery cell 1 accommodated in inner case 3 to outside inner case 3 may be emitted out of outer case 5 without generating flame from the blowout substances. Exhaust port 8 illustrated in the drawing includes opening 57 opening in outer case 5, and porous plate 68 disposed on opening 57. In outer case 5 illustrated in the drawing, numerous holes 57a are formed in side plate 53 in a grid pattern to form opening 57, and porous plate 68 is disposed on the inner side of this opening 57. Porous plate 68 has numerous through-holes 68a with small diameters. An opening area of through-holes 68a is smaller than an opening area of holes 57a, and an inner diameter of through-hole 68a ranges is equal to or larger than 0.5 mm and equal to or less than 3 mm. The opening area of holes 57a ranges from 10 to 30 times of the opening area of through-holes 68a, and 5 to 10 through-holes 68a are provided in one hole 57a. This structure provides a flame arrester function by providing small opening area in through-hole 68a of porous plate 68 and also a small opening area in entire porous plate 68. A state of oxygen deficiency is achieved inside outer case 5 to shut off flame (anti-inflammatory effect and prevention of backfire and ignition). For example, punching metal can be used as porous plate 68. However, metal mesh may be used for the porous plate.

Outer case 5 described above effectively prevents outer flame, due to flame generated by blowout substances from secondary battery cell 1, from spraying out of outer case 5 by making high temperature and high pressure gas discharged from inner case 3 pass through-holes 68a of porous plate 68 in exhaust port 8 and then releasing the gas from numerous holes 57a to the outside of outer case 5. In power supply device 100, when an amount of blowout substances, such as gas and foreign substances, discharged from secondary battery cell 1 is small and the internal pressure of outer case 5 does not increase to the predetermined pressure to open the check valve, the blowout substances pass porous plate 68 disposed on opening 57 of outer case 5 and are emitted outside to prevent any harmful effect, such as outer flame. When a large amount of gas and foreign substances are discharged from secondary battery cell 1 beyond the capacity of porous plate 68, and the internal pressure of outer case 5 exceeds an opening pressure that is the predetermined pressure, check valve 7 described above operates to open the valve, and the gas and foreign substances inside outer case 5 are promptly emitted outside from opened discharge window 71. When the internal pressure of outer case 5 decreases below the opening pressure by discharging the gas and foreign substances outside, check valve 7 closes. When check valve 7 is closed, outer case 5 is closed, and porous plate 68 described above functions as the flame arrester. Therefore, in power supply device 100, internal gas and foreign substances are ideally discharged outside by controlling external emission of gas and foreign substances in an optimum state according to the amount of blowout substances, such as gas and foreign substances, and the internal state of the outer case. However, the power supply device of the present disclosure does not necessarily include the exhaust port on the outer case. The power supply device discharges blowout substances, such as gas and foreign substances, discharged from secondary battery cell 1 through the check valve provided in the outer case.

### Board Room 60, Circuit Board

In power supply device 100 illustrated in FIGS. 3-6, board room 60 accommodating a circuit board may be provided, as indicated by dash-dotted line, at a position facing wiring space 29 of inner case 3 on the end surface side of outer case 5. Board room 60 is separated from the internal space of outer case 5, so that the circuit board may be protected from blowout substances, such as high temperature and high pressure gas, discharged from inner case 3. A charge/discharge circuit for charging and discharging secondary battery cells 1, a protective circuit for monitoring the voltage and temperature of secondary battery cells 1 and shutting off the current when a failure occurs, and the like can be mounted on the circuit board. Positive and negative output terminals and signal terminals connected to the circuit board may be arranged on outer case 5 in a state being exposed from the end plate.

In above outer case 5, inner case 3 is fixed onto lower-surface plate 51 of second case 50B, the lead wires and the output lines led out from inner case 3 are connected to the circuit board disposed in board room 60, and then first case 50A is connected to second case 50B. In first case 50A, side plate 53 and upper-surface plate 52 are fixed to fixing piece 55 of second case 50B with fixing screw 69 to form outer case 5 with the box shape.

In inner case 3 of power supply device 100 according to Embodiment 1 described above, first plate 35 is disposed on the inner side of side wall 33X, and second plate 36 is disposed on the outer side of side wall 33X. Lower case 30A in which first plates 35 are connected perpendicularly to both sides of lower-surface plate 31 and upper case 30B in which second plates 36 are connected perpendicularly to both sides of upper-surface plate are connected to each other to configure stacked first plate 35 and second plate 36. However, the power supply device of the present disclosure is not limited to the above arrangement of the first plate and the second plate that form the side surface of the inner case. In the inner case, arrangement of the first plate and the second plate may be changed as described below.

### Exemplary Embodiment 2

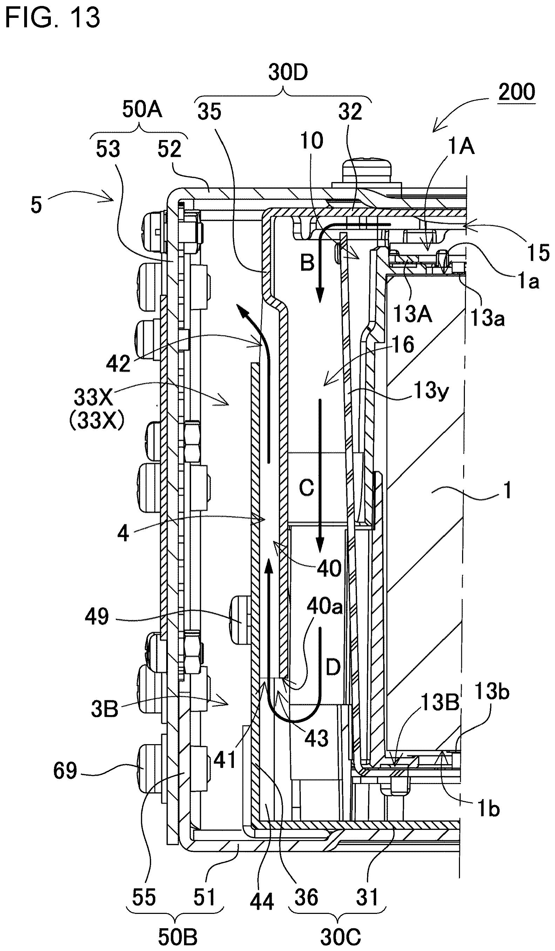

In power supply device 200 illustrated in FIG. 13, first plate 35 is disposed on an inner side of side wall 33X, and second plate 36 is disposed on an outer side of side wall 33X. Lower case 30C in which second plates 36 are connected perpendicularly to both sides of lower-surface plate 31 and upper case in which first plates 35 are connected perpendicularly to both sides of upper-surface plate 32 are connected to each other to stack first plate 35 and second plate 36 on each other. In inner case 3B, lower case 30C is connected to upper case 30D such that first plates 35 disposed on both sides of upper case 30D are disposed between second plates 36 disposed on both sides of lower case 30C.

Inner case 3B shown in FIG. 13 is disposed such that first opening 41 formed at one end of groove-shaped recess 40 formed in first plate 35 faces downward, second opening 42 formed in another end of groove-shaped recess 40 partially closed by second plate 36 faces upward is disposed on an upper part of exhaust duct 4. In inner case 3B, first opening 41 communicating with the inside of inner case 3B is disposed on a lower end of exhaust duct 4, and second opening 42 communicating with the outside of inner case 3B is disposed on an upper end of exhaust duct 4. Therefore, blowout substances, such as gas, filling inner case 3B flow to exhaust duct 4 from first opening 41 provided in a lower part of side wall 33X, as indicated by an arrow in the drawing, passes exhaust duct 4, and then, are emitted out of inner case 3B from second opening 42 provided in an upper part of side wall 33X.

As illustrated in the drawing, in the structure of accommodating secondary battery cells 1 with exhaust valves facing upward in inner case 3B, blowout substances discharged from the upper surface side of battery assembly 10 flow, as indicated by arrow B, from upper space 15 formed between the upper surface of battery assembly 10 and upper-surface plate 32 of inner case 3 toward side wall 33X, then as indicated by arrow C, flow downward along side space 16 formed between side wall 33X of inner case 3 and battery assembly 10, and are guided from first opening 41 provided on the lower part of side space 16 to exhaust duct 4, and emitted outside. Therefore, a flow route of guiding blowout substances, such as gas, discharged from secondary battery cell 1 to exhaust duct is long. Thus, the pressure and temperature of gas is sufficiently decreased inside inner case 3B before being emitted outside.

Furthermore, in inner case 3B, first opening 41 is formed in one end of groove-shaped recess 40 by partially cutting the tip end part of first plate 35 by cut part 43. The tip end of first plate 35 not cut by cut part 43 is disposed, as uncut part 44, along the inner surface of second plate 3, so that the connecting position of second case 30D is determined by bringing the lower end of uncut part 44 into contact with lower-surface plate 31.

### Exemplary Embodiment 3

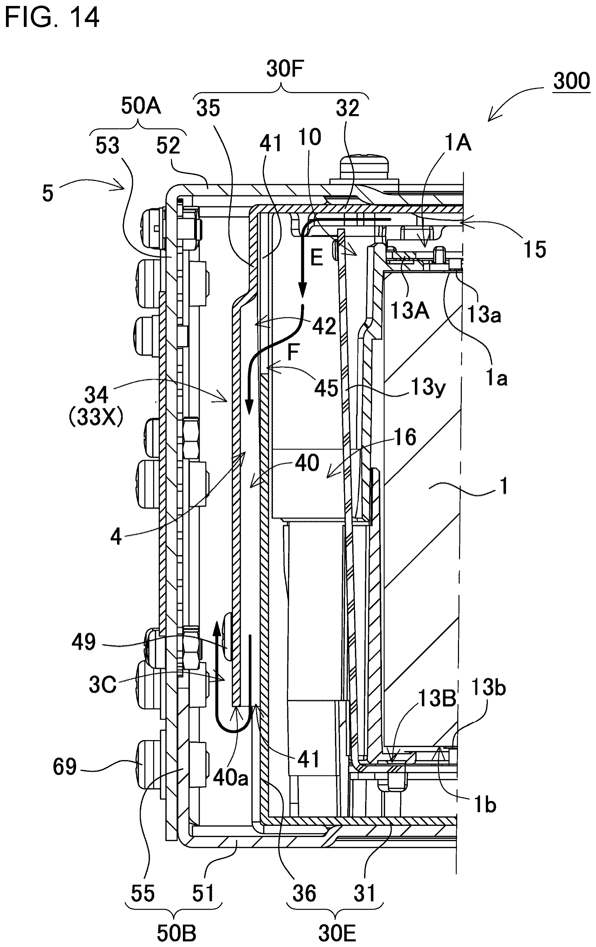

In power supply device 300 shown in FIG. 14, first plate 35 is disposed on the outer side of side wall 33X, and second plate 36 is disposed on the inner side of side wall 33X. In addition, lower case 30E including lower-surface plate 31 and second plates 36 connected perpendicularly to both sides of lower-surface plate 31 and upper case 30F including upper-surface plate 2 and first plates 35 connected perpendicularly to both sides of upper-surface plate 2 are connected to each other to constitute stacked first plate 35 and second plate 36. In inner case 3C, lower case 30E is connected to upper case 30F such that first plates 35 provided on both sides of upper case 30F are disposed on the outer side of second plates 36 provided on both sides of lower case 30E.

In inner case 3C shown in FIG. 14, first opening 41 formed in one end of groove-shaped recess 40 formed in first plate 35 faces downward, and second opening 42 formed in the other end of groove-shaped recess 40 partially closed by second plate 36 facing upward is disposed in an upper part of exhaust duct 4. In inner case 3C, second opening 42 communicating with the inside of inner case 3C is disposed on the upper end of exhaust duct 4, and first opening communicating with the outside of inner case 3C is disposed on the lower end of exhaust duct 4. Therefore, blowout substances, such as gas, filling inner case 3C flow from second opening 42 provided in the upper part of side wall 33X to exhaust duct 4, as indicated by an arrow in the drawing, then pass exhaust duct 4, and are emitted out of inner case 3C from first opening 41 provided in the lower part of sidewall 33X.

Therefore, as illustrated in the drawing, in a structure of accommodating secondary battery cells 1 including exhaust valves facing upward in inner case 3C, blowout substances discharged from an upper surface side of battery assembly 10 flow through upper space 15 formed between the upper surface of battery assembly 10 and upper-surface plate 32 of inner case 3C toward side wall 33X, are then guided from second opening 43 formed in the upper end of side wall 33X to exhaust duct 4, and are promptly discharged. Thus, high temperature and high pressure gas and foreign substances discharged from secondary battery cell 1 in an abnormal state are promptly discharged outside inner case 3C, so as to reduce the detrimental effect of gas and foreign substances on surrounding secondary battery cells 1. Still more, a structure of passing blowout substances discharged to inner case 3C from the top to bottom of the exhaust duct 4 has an advantage that even foreign substances such as liquid or metal pieces discharged from secondary battery cell 1 drop along exhaust duct 4 to smoothly emit the foreign substances out of inner case 3C.

Furthermore, in inner case 3C, an end of second plate 36 disposed on the inner side of side wall 33X is partially cut by second cut parts 45 to determine a position that second plate 36 closes respective another ends of groove-shaped recesses 40. In addition, the end of second plate 36 not cut by second cut parts 45 is disposed, as second uncut part 46, along the inner surface of first plate 35. Thus, the connecting position of second case 30F is determined by bringing the upper end of second uncut part 46 into contact with upper-surface plate 32.

### Exemplary Embodiment 4

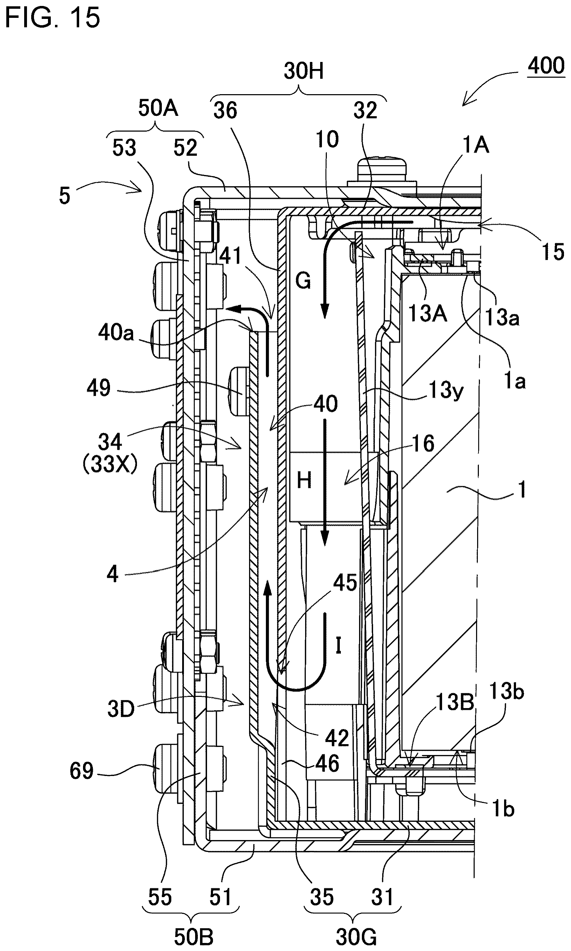

In power supply device 400 shown in FIG. 15, first plate is disposed on the outer side of side wall 33X, and second plate 36 is disposed on the inner side of side wall 33X. Lower case 30G in which first plates 35 are connected perpendicularly to both sides of lower-surface plate 31, and upper case 30H in which second plates 36 are connected perpendicularly to both sides of upper-surface plate 32 are connected to each other to constitute stacked first plate 35 and second plate 36. In this inner case 3D, lower case 30G is connected to upper case 30H such that second plates 36 provided on both sides of upper case 30H are disposed between first plates 35 provided on both sides of lower case 30G.

In inner case 3D shown in FIG. 15, first opening 41 formed in one end of groove-shaped recess 40 formed in first plate 35 faces upward, and second opening 42 formed in another end of groove-shaped recess 40 partially closed by second plate 36 faces downward in a lower part of exhaust duct 4, In inner case 3D, second opening 42 communicating with the inside of inner case 3D is disposed at the lower end of exhaust duct 4, and first opening 41 communicating with the outside of inner case 3D is disposed at the upper end of exhaust duct 4. Therefore, blowout substances, such as gas, filling inner case 3D flow, as indicated by an arrow in the drawing, from second opening 42 provided in the lower part of side wall 33X to exhaust duct 4, pass exhaust duct 4, and are discharged outside inner case 3D from first opening provided in the upper part of side wall 33X.

Therefore, as illustrated in the drawing, in a structure of accommodating secondary battery cells 1 with exhaust valves facing upward in inner case 3D, blowout substances discharged from an upper surface side of battery assembly 10 flow, as indicated by arrow G in FIG. 15, from upper space 15 formed between the upper surface of battery assembly 10 and upper-surface plate 32 of inner case 3D toward side wall33X, and then, as further indicated by arrow H, drop along side space 16 formed between side wall 33X of inner case 3 and battery assembly 10, are guided from second opening 42 provided in a lower part of side space 16 to exhaust duct 4, and are emitted. Thus, a flow route of blowout substances, such as gas, discharged from secondary battery cell 1 guided to exhaust duct 4 is long, and a pressure and temperature of gas may be sufficiently decreased inside inner case 3D before external emission.

Furthermore, in inner case 3D, a position that second plate 36 closes another end of groove-shaped recess 40 is determined by partially cutting the tip end part of second plate 36 disposed on the inner side of side wall 33X by second cut part 45, and also the end of second plate 36 not cut b second cut part 45 is disposed along the inner surface of first plate as second uncut part 46. Thus, a connecting position of second case 30H is determined by allowing the lower end of second uncut part 46 to contact lower-surface plate 31.

### Exemplary Embodiment 5

Inner cases 3, 3B, 3C, and 3D of power supply devices 100, 200, 300, and 400 described in the above Embodiments 1-4 includes flat second plate 36 stacked on first plate 35. In this structure, second plate 36 has a simple structure to form exhaust duct 4 in stacked part 34 with first plate 35. However, the second plate stacked on first plate 35 is not necessarily flat, and the second plate having an uneven shape is acceptable. For example, the second plate may have, similar to the first plate, groove-shaped recesses extending in the height direction of the side wall.

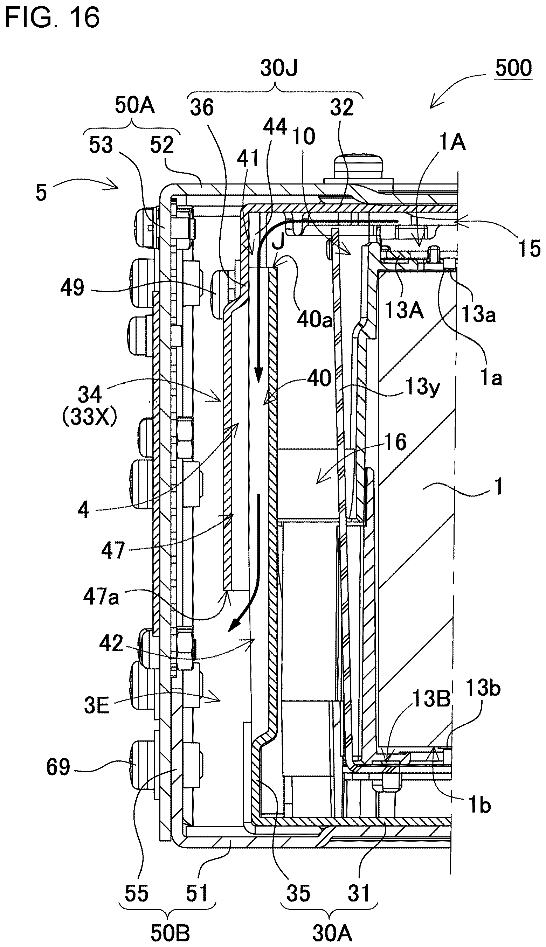

In power supply device 500 indicated in FIG. 16, first plate 35 is disposed on the inner side of side wall 33X and second plate 36 is disposed on the outer side of side wall 33X in inner case 3E. In addition, second plate 36 has second groove-shaped recesses 47 in a surface of second plate 36 facing first plate 35, extending in the height direction of side wall 33X. Inner case 3E has a structure of stacking first plate 35 and second plate 36 by connecting lower case 30A in which first plates 35 having groove-shaped recesses 40 are connected to both sides of lower-surface plate 31 to upper case 30J in which second plates 36 having second groove-shaped recesses 47 are connected to both sides of upper-surface plate 32. Second plate 36 has second cut part 47a formed by cutting one end of second groove-shaped recess 47 in a direction intersecting the extending direction of second groove-shaped recess 47. Second groove-shaped recess 47 provided in second plate 36 faces groove-shaped recess 40 provided in first plate 35, and second cut part 47a formed in second groove-shaped recess 47 faces second opening 42 of groove-shaped recess 40 while second plate 36 is stacked on first plate 35. In this structure, groove-shaped recess 40 of first plate 41 and second groove-shaped recess 47 of second plate 36 are stacked on each other while facing each other. This configuration increases the capacity of exhaust duct 4 formed between first plate 35 and second plate 36, and increases an opening area of second opening 42 where second cut end 47a is arranged. Second plate 36 may be reinforced by an uneven part on second plate 36.

### INDUSTRIAL APPLICABILITY

A power supply device according to the present disclosure is suitably used for stationary power storage applications, such as a power supply for home-use, office-use, and factory-use power storage systems, a backup power supply for servers, and a power supply for vehicles including hybrid vehicles and electric vehicles.

### REFERENCE MARKS IN THE DRAWINGS

- 100, 200, 300, 400, 500: power supply device
- 1: battery cell
- 1A: first end face
- 1a: central electrode
- 1b: end electrode
- 3, 3B, 3C, 3D, 3E: inner case
- 4: exhaust duct
- 5: outer case
- 7: check valve
- 8: exhaust port
- 10: battery assembly
- 11: battery block
- 13: lead plate
- 13A: first lead plate
- 13B: second lead plate
- 13a: first connecting tab
- 13b: second connecting tab
- 13x: connector
- 13y: protruding connector
- 15: upper space
- 19: set screw
- 20: battery holder
- 20A: first holder
- 20B: second holder
- 20X: side surface
- 20x: protrusion
- 20y: recess
- 20a: boss
- 21: holder
- 25: exhaust path
- 26: collision plate
- 26A: bent part
- 27: closure plate
- 27A: bending piece
- 28: space
- 29: wiring space
- 30A, 30C, 30E, 30G: lower case
- 30B, 30D, 30F, 30H, 30J: upper case
- 31: lower-surface plate
- 32: upper-surface plate
- 33: outer peripheral wall
- 33X: side wall
- 33Y: end wall
- 34: stacked part
- 35: first plate
- 36: second plate
- 37: end plate
- 38: fixing piece
- 38A: fixing part
- 39: ridge
- 40: groove-shaped recess
- 40a: cut end
- 41: first opening
- 42: second opening
- 43: cut part
- 44: uncut part
- 45: second cut part
- 46: second uncut part
- 47: second groove-shaped recess
- 47a: second cut end
- 49: set screw
- 50A: first case
- 50B: second case
- 51: lower-surface plate
- 52: upper-surface plate
- 53: side plate
- 54: end plate
- 55: fixing piece
- 57: opening
- 57a: hole
- 58: ridge
- 59: ridge
- 60: board room
- 68: porous plate
- 68a: through-hole
- 69: fixed screw
- 70: closure mechanism
- 71: discharge window
- 72: leaf spring
- 72A: fixing part
- 72B: closure part
- 72C: slit
- 73: fixing screw
- 74: fixing hole

## Claims

1. A power supply device comprising:
a plurality of secondary battery cells, each of the plurality of secondary battery cells including an exhaust valve that opens when an internal pressure of the each of the plurality of secondary battery cells exceeds a predetermined pressure;
an inner case accommodating the plurality of secondary battery cells therein; and
an outer case covering the inner case, wherein
the inner case includes a first plate and a second plate that constitute a side wall of the inner case,
the first plate and the second plate extend in an extending direction of the inner case, and form a stacked part of the side wall in which the first plate and the second plate are partially stacked in an intermediate region between a top and bottom of the side wall,
the first plate has a plurality of groove-shaped recesses in a surface of the first plate facing the second plate, each of the groove-shaped recesses extending in a height direction of the side wall and having a cut end at one end of the each of the plurality of groove-shaped recesses cut in a direction intersecting an extending direction of the each of the plurality of groove-shaped recesses, the cut end constituting a first opening,
the second plate forms an exhaust duct in a part of the second plate stacked on the first plate by closing the one end of the each of the plurality of groove-shaped recesses where the first opening of the each of the plurality of groove-shaped recesses is formed, the second plate constituting a second opening at another end of the each of the plurality of groove-shaped recesses opened and unclosed by the second plate, the exhaust duct having a tubular shape, and
the exhaust duct communicates with an inside and an outside of the inner case via the first opening and the second opening.

2. The power supply device according to claim 1, wherein
the first plate of the inner case is disposed on an inner side of the side wall, and the second plate is disposed on an outer side of the side wall, and
the exhaust duct communicates with the inside of the inner case via the first opening, and communicates with the outside of the inner case via the second opening.

3. The power supply device according to claim 2, wherein
the inner case includes:
a lower case includes a lower-surface plate and first plates connected perpendicularly to both sides of the lower-surface plate, each of the first plates being the first plate; and
an upper case including an upper-surface plate and second plates connected perpendicularly to both sides of the upper-surface plate, each of the second plates being the second plate, and
the lower case and the upper case are connected to each other such that the first plate and the second plate are stacked on each other.

4. The power supply device according to claim 3, wherein the first plate has cut parts and an uncut part which are provided at an end of the first plate, the end of the first plate being partially cut at the cut parts, the one end of the each of the plurality of groove-shaped recesses being formed at a corresponding one of the cut parts, the end of the first plate not being cut at the uncut part, the uncut part being disposed along an inner surface of the second plate, an upper end of the uncut part contacting the upper-surface plate.

5. The power supply device according to claim 2, wherein
the inner case includes:
a lower case including a lower-surface plate and second plates connected perpendicularly to both sides of the lower-surface plate, each of the second plates being the second plate; and
an upper case including an upper-surface plate and first plates connected perpendicularly to both sides of the upper-surface plate, each of the first plates being the first plate, and
the lower case and the upper case are connected to each other such that the first plate and the second plate are stacked on each other.

6. The power supply device according to claim 5, wherein the first plate has cut parts and an uncut part which are provided at an end of the first plate, the end of the first plate being partially cut at the cut parts, the one end of the each of the plurality of groove-shaped recesses being formed at a corresponding one of the cut parts, the end of the first plate not being cut at the uncut part, the uncut part being disposed along an inner surface of the second plate, a lower end of the uncut part contacting the lower-surface plate.

7. The power supply device according to claim 1, wherein
the first plate of the inner case is disposed on an outer side of the side wall, and the second plate of the inner case is disposed on an inner side of the side wall, and
the exhaust duct communicates with the inside of the inner case via the second opening, and communicates with the outside of the inner case via the first opening.

8. The power supply device according to claim 7, wherein
the inner case includes:
a lower case including a lower-surface plate and second plates connected perpendicularly to both sides of the lower-surface plate, each of the second plates being the second plate; and
an upper case including an upper-surface plate and first plates connected to both sides of the upper-surface plate, each of the first plates being the first plate, and
the lower case and the upper case are connected to each other such that the first plate and the second plate are stacked on each other.

9. The power supply device according to claim 8, wherein the second plate has second cut parts and a second uncut part which are provided at an end of the second plate, the end of the second plate being partially cut at the second cut parts, a closed position of the another end of the each of the plurality of groove-shaped recesses being provided at a corresponding one of the second cut parts, the end of the second plate not being cut at the second uncut part, the uncut part being disposed along an inner surface of the first plate, an upper end of the second uncut part contacting the upper-surface plate.

10. The power supply device according to claim 7, wherein
the inner case includes:
a lower case including a lower-surface plate and first plates connected perpendicularly to both sides of the lower-surface plate, each of the first plates being the first plate; and
an upper case including an upper surface plate and second plates connected perpendicularly to both sides of the upper-surface plate, each of the second plates being the second plate, and
the lower case and the upper case are connected to each other such that the first plate and the second plate are stacked on each other.

11. The power supply device according to claim 10, wherein the second plate has second cut parts and a second uncut part which are provided at an end of the second plate, the end of the second plate being partially cut at the second cut parts, a closed position of the another end of the each of the plurality of groove-shaped recesses being provided at a corresponding one of the second cut parts, the end of the second plate not being cut at the second uncut part, the uncut part being disposed along an inner surface of the first plate, a lower end of the second uncut part contacting the lower-surface plate.

12. The power supply device according to any one of claims 2 to 6, further comprising
a battery holder accommodating therein the plurality of secondary battery cells to arrange the plurality of secondary battery cells parallel to one another, the plurality of secondary battery cells being cylindrical batteries, wherein
the battery holder has a shape to accommodate therein the plurality of secondary battery cells in a bale-piling layout in a plan view, the battery holder having a side surface facing the side wall of the inner case, the side surface having an uneven shape having ridges and recesses extending in upward and downward directions, the ridges and recesses being arranged alternately, and
the exhaust duct is disposed in the recesses formed in the side surface of the battery holder.

13. The power supply device according to any one of claims 1 to 11, wherein the each of the plurality of secondary battery cells has a surface including the exhaust valve, the surface of the each of the plurality of secondary battery cells facing upward.

14. The power supply device according to any one of claims 1 to 11, wherein the second plate is flat.

15. The power supply device according to any one of claims 1 to 11, wherein
the second plate has a plurality of second groove-shaped recesses in a surface of the second plate facing the first plate, each of the plurality of groove-shaped recesses extending in a height direction of the side wall, the each of the plurality of groove-shaped recesses having a second cut end at one end of the each of the plurality of second groove-shaped recesses cut in a direction intersecting an extending direction of the each of the plurality of groove-shaped recesses,
the plurality of second groove-shaped recesses provided in the second plate face the plurality of groove-shaped recesses provided in the first plate, respectively, and
the second cut end provided at the each of the plurality of second groove-shaped recesses is disposed at the second opening of the each of the plurality of groove-shaped recesses such that the second plate is stacked on the first plate.
